# EUROPÄISCHE PATENTSCHRIFT

(11) **EP 2 705 980 B1**
(45) Veröffentlichungstag und Bekanntmachung des Hinweises auf die Patenterteilung: **30.03.2016**
(21) Anmeldenummer: 13182777.6
(22) Anmeldetag: 03.09.2013
(51) Int. Cl.: B60N 2/42, B60R 21/013, B60N 2/02

(54) **Sicherheitssitz und Verfahren zur Reduzierungen der Krafteinwirkung auf eine Person**
Safety seat and method for reducing the forces affecting a person
Siège de sécurité et procédé de réduction de la force s'exerçant sur une personne

(30) Priorität: 07.09.2012 DE 102012108323
(43) Veröffentlichungstag der Anmeldung: 12.03.2014
(73) Patentinhaber: Schroth Safety Products GmbH, 59757 Arnsberg (DE)
(72) Erfinder: Reinck, Wilko, 59505 Bad Sassendorf (DE)
(74) Vertreter: Griepenstroh, Jörg

(56) Entgegenhaltungen:
- WO-A1-2010/000970
- WO-A1-2012/167245
- DE-A1- 19 932 277
- DE-A1-102007 053 680
- DE-C1- 19 702 398
- US-A- 5 441 301

## Beschreibung

Die Erfindung betrifft ein Verfahren zur Reduzierung der Krafteinwirkung auf eine Person, die auf einen Sicherheitssitz eines Kraftfahrzeugs sitzt, gemäß den Merkmalen des Patentanspruchs 1.

Ferner betrifft die Erfindung einen Sicherheitssitz mit den Merkmalen des Patentanspruchs 6.

Es zählt zum Stand der Technik, Sicherheitssitze in gepanzerten Kraftfahrzeugen von dem Fahrzeugboden zu entkoppeln, damit die beispielsweise bei Überfahren einer Mine wirkenden Kräfte nicht unmittelbar über die Sitzstruktur auf einen Insassen des Kraftfahrzeugs übertragen werden. Das Überfahren einer Mine hat oftmals zur Folge, dass sich nicht nur das Fahrzeug als Ganzes vom Boden abhebt, sondern sich auch der Fahrzeugboden erheblich nach innen durchbiegt. Am Fahrzeugboden befestigte Sitze übertragen damit nicht nur die beim Fahrbetrieb entstehenden Stöße und Vibrationen auf die Fahrzeuginsassen, sondern auch die wesentlich größeren Beschleunigungskräfte im Fall einer Minenexplosion oder auch bei einem Unfall des Fahrzeugs.

Es ist bereits vorgeschlagen worden, Sicherheitssitze von der Fahrzeugstruktur zu entkoppeln, indem die Sitze über Zugmittel aufgehängt werden. Die Zugmittel haben die Eigenschaft, dass keine Druckkräfte übertragen werden können. Die bei einer Minenexplosion entstehende Schockwelle wird somit nicht auf den Sitz und damit auf den Insassen übertragen. Sitze, die über Zugmittel gehalten sind, benötigen jedoch mehr Fixierungspunkte als Sitze mit starren Anbindungen.

Durch die WO 02/26524 A1 zählt ein Sicherheitssitz mit einem Dämpfungsmechanismus zum Stand der Technik der im Bereich der Rücklehne des Sitzes angeordnet ist. Die Sitzstruktur umfasst eine Sitzflächeneinheit und eine Rückeneinheit. Der untere Teil des Sitzes kann sich insgesamt absenken, um Belastungen auf den Insassen zu reduzieren.

Durch die US 2010/0270836 A1 zählt eine Sitzstruktur mit einem Energieabsorber zum Stand der Technik, wobei die Energie sowohl beim Anheben des Sitzes als auch beim Absenken des Sitzes abgebaut wird. Bei einer Minenexplosion heben sich das gesamte Fahrzeug und damit die Sitzstruktur an. Während des Anhebens wird das hintere Ende der Sitzstruktur unter der Last des Insassen abgesenkt und dadurch die auf den Insassen wirkende Kraft reduziert.

Die nicht vorveröffentlichte WO 2012/167245 A1 offenbart ein Verfahren zur Reduzierung der Krafteinwirkung auf eine Person, die auf einem Sicherheitssitz eines Kraftfahrzeuges sitzt, wobei der Sicherheitssitz durch eine aus der Explosion resultierende Kraft, die im Wesentlichen senkrecht nach oben wirkt, zusammen mit dem Kraftfahrzeug bis zu einem oberen Totpunkt angehoben wird, wobei der Sicherheitssitz unter der Last der Person während einer Steigphase, die vom Zeitpunkt der Krafteinwirkung bis zum Erreichen des oberen Totpunktes dauert, insgesamt relativ zum Kraftfahrzeug verlagert wird oder eine Sitzflächeneinheit besitzt, die zumindest teilweise relativ zu einer Rückeneinheit des Sicherheitssitzes während der Steigphase nach unten verlagert wird. Es sind Detektoren vorgesehen, die im Wirkzusammenhang mit einem Auslösemittel stehen. Das Auslösemittel soll vor Erreichen des oberen Totpunktes ein Schutzmittel auslösen, welches einen ungebremsten Anprall der Person an dem Kraftfahrzeug verhindert und/oder auf die Person wirkende Kräfte mindert.

Die DE 199 32 277 A1 offenbart eine Einrichtung in minengefährdeten Fahrzeugen zum Schutz der Besatzung bei Minentreffern. Innerhalb des Fahrzeugs sind in der Umgebung jedes Sitzes im Schulter-/Kopfbereich des diesen Sitz besetzenden Besatzungsmitgliedes mindestens zwei zu beiden Seiten des Schulter-/Kopfbereiches und einander gegenüberliegend Airbags angeordnet, die an sensorgesteuerte Gasquellen angeschlossen sind. Bei Auslösung der Airbags sind Kopf und Schulter des Besatzungsmitglieds zwischen den Airbags fixiert. Es kann zusätzlich im Bauch-/Brustbereich mindestens ein weiterer Airbag angeordnet sein. Das Steuersystem ist an die besonderen Verhältnisse von Kampffahrzeugen angepasst, das gilt insbesondere für die auslösenden Beschleunigungen, die Aufblasgeschwindigkeit und die Aufblasreihenfolge der Airbags. Es wird nicht näher ausgeführt, wo die auslösenden Beschleunigungen gemessen werden.

Aus der US 5,441,301 A ist eine Unfalldetektionsvorrichtung für Kraftfahrzeuge bekannt. Es soll im Crashbereich des Kraftfahrzeugs eine elektrisch leitende Röhre montiert werden, innerhalb welcher ein elektrischer Leiter konzentrisch positioniert ist. Berührt der Leiter die Röhre, ist dies ein Signal für eine Deformation des Fahrzeugs im Crashbereich und es kann zur Auslösung eines Airbags verwendet werden. Bei Minenansprengungen von Kraftfahrzeugen sind derartige Sensoren weniger gut geeignet, da sie in unmittelbarer Nähe des Crashbereiches, also unterhalb des Fahrzeugs montiert werden müssen. Dort kann es aber zu Steinschlag oder anderen Einflüssen kommen, so dass Airbags fehlgezündet werden. Zudem müsste bei einer Minenansprengung, bei welcher das gesamte Fahrzeug angehoben wird, immer sichergestellt werden, dass ein solcher Sensor im Ansprengungsbereich liegt. Der vorgeschlagene Sensor eignet sich daher primär für die Crashzone im Frontbereich eines Kraftfahrzeuges und weniger für den Unterbodenbereich.

Die DE 10 2007 053 680 A1 offenbart ein Verfahren zum Schutz von Insassen eines Fahrzeugs bei einem Unfall, bei dem mittels wenigstens eines an wenigstens einer A-Säule des Fahrzeugs angeordneten Sensors eine Deformation der A-Säule detektiert wird und bei dem automatisch eine Verstellung wenigstens eines Fahrzeugsitzes derart ausgelöst wird, dass ein auf diesem Fahrzeugsitz befindlicher Passagier aus einem Bereich des Fahrzeuges weg bewegt wird, in dem ein besonders hohes Verletzungsrisiko besteht. Bei Minenansprengungen von unten wird die A-Säule primär nicht verformt, sondern der Fahrzeugboden. Zudem ist es aufwändig, einen einzelnen Fahrzeugsitz gezielt derart auszulösen, dass ein auf diesem Fahrzeugsitz sich befindender Passagier aus dem ermittelten Gefährdungsbereich weg bewegt wird, insbesondere wenn die Gefährdung darin besteht, sich den Kopf an der Fahrzeugdecke zu stoßen.

Obwohl unterschiedliche Möglichkeiten zum Stand der Technik zählen, Relativbewegungen des Sitzes oder von Sitzbestandteilen zur Dämpfung der auf die Insassen wirkenden Kräfte auszunutzen, gibt es jedoch nur begrenzte Möglichkeiten, Minenexplosionen zuverlässig zu erkennen und entsprechende Schutzmechanismen frühzeitig fehlerfrei auszulösen.

Zur Erkennung der Ansprengung werden in der Regel Beschleunigungssensoren benutzt. Beschleunigungssensoren sind jedoch nur bedingt einsetzbar, da die Beschleunigung im Fall einer Minenansprengung sehr kurz wirkt. Eine sichere Erkennung ist daher nur schwer möglich. Zudem muss ein Kraftfahrzeug mit vielen Sensoren ausgestattet werden. Explodiert eine Mine unter einem schweren Fahrzeug beispielsweise unter dem vorderen, rechten Rad, so kann die Beschleunigung hinten links beispielsweise relativ gering sein, so dass ein dort angeordneter Sensor eventuell die Ansprengung nicht als solche erkennen würde. Weiterhin gibt es Überlegungen, eine Ansprengung über Schall-, Druck- oder Lichtsensoren zu erkennen. Auch diese Sensortechnik ist aufwendig, vor allen Dingen im Hinblick darauf, die Minenansprengung sicher zu erkennen und keine Fehlauslösung zu erzeugen.

Neben der Primärgefährdung, nämlich der extremen Beschleunigung des Fahrzeugs nach oben durch die Minenexplosion, gibt es jedoch auch Sekundärgefährdungen der Insassen, wobei nicht alle Insassen automatisch gleich gefährdet sind. Wenn das angesprengte Fahrzeug beispielsweise angehoben worden ist, zum Beispiel um 80 cm bis 90 cm, fällt es beim sogenannten slam down wieder herunter und durchläuft dabei den oberen Totpunkt. Im oberen Totpunkt verharren die Insassen aufgrund ihrer Massenträgheit in der angehobenen Position und stoßen unter Umständen mit dem Kopf an die Decke des Kraftfahrzeugs. Hierbei kann es zu schweren Verletzungen kommen. Es wäre zwar theoretisch möglich, vorzeitig Airbags auszulösen, falls Beschleunigungssensoren eine Minenexplosion erkannt haben. Es muss jedoch ausgeschlossen werden, dass eine Vertikalbeschleunigung, wie sie beispielsweise beim Durchfahren eines Schlaglochs oder in unebenem Gelände auftritt, zu einer Fehlauslösung führt. Eine solche Fehlauslösung könnte ebenfalls eine Gefahr für die Insassen bedeuten, und zwar auch für diejenigen Insassen, die gar nicht gefährdet sind, weil in ihrem Bereich des Fahrzeugs die Vertikalbeschleunigung deutlich niedriger ist. Schall- und Drucksensoren würden bei hohen Vertikalbeschleunigungen, wie sie zum Beispiel bei dem Durchfahren eines extremen Schlaglochs auftreten, gar nicht ansprechen. Auch Gegenmaßnahmen für die Primärgefahren, wie zum Beispiel Gegensprengungen, wären sinnlos.

Der Erfindung liegt die Aufgabe zugrunde, eine Möglichkeit aufzuzeigen, die Krafteinwirkung auf eine Person, die auf einem Sicherheitssitz eines Kraftfahrzeugs sitzt, zu reduzieren. Ferner soll ein entsprechender Sicherheitssitz aufgezeigt werden, welcher geeignet ist, die Krafteinwirkung auf eine Person zu begrenzen, wenn eine extreme Vertikalbeschleunigung auf das Kraftfahrzeug einwirkt.

Das erfindungsgemäße Verfahren zur Lösung dieses Problems basiert auf der Überlegung, dass keine Beschleunigungssensoren verwendet werden, sondern eine Möglichkeit aufgezeigt werden soll, die Insassen individuell, d. h. abhängig von der Belastung des jeweiligen Sitzes, zu schützen, wenn bei einer Minenansprengung der obere Totpunkt einer Steigphase erreicht wird. Im Bereich des oberen Totpunkts kann es zu Kopfverletzungen durch ungebremsten Anprall der Personen an dem Kraftfahrzeug führen. Um dies zu verhindern, wird eine Relativverlagerung am Sicherheitssitz oder eine Relativverlagerung des Sicherheitssitzes detektiert. Die Erfindung umfasst daher ein Erkennungsmittel, das die Relativverlagerung an dem Sitz oder im Bereich des Sitzes detektiert. Wenn der Sicherheitssitz sich relativ zum Kraftfahrzeug oder auch nur die Sitzflächeneinheit relativ zur Rückeneinheit des Sicherheitssitzes verlagert, ist dies ein sicheres Indiz für eine Minenansprengung, da insbesondere durch die Minenansprengung bzw. durch eine aus einer Explosion resultierenden Kraft die notwendigen Beschleunigungen erreicht werden können, die dazu führen, dass der Sicherheitssitz in Teilen oder vollständig eine Relativverlagerung vollzieht.

Es verbleibt typischerweise ein relativ langer Zeitraum von 0,4 Sekunden bis 0,5 Sekunden von dem Erkennen der Sitzabsenkungen bis zur Auslösung eines Schutzmittels, beispielsweise eines Airbags. Da sich der Sitz zunächst ganz oder teilweise absenkt, verharrt die Person auf dem Sitz in einer frühen Steigphase des Kraftfahrzeugs in größerem Abstand zur Decke des Kraftfahrzeugs. Es bestehen mithin ein genügender Zeitraum und auch ein genügender Freiraum, geeignete Schutzmittel auszulösen.

Als Schutzmittel kommt bevorzugt ein Airbag zum Einsatz. Hierbei kann es sich um einen Kopfairbag handeln, der oberhalb des Sitzes für Schutz sorgt. Selbstverständlich sind auch Seitenairbags auslösbar. Es zählt nämlich zu den Sekundärrisiken einer Ansprengung, dass das Kraftfahrzeug umfällt oder sich überschlägt.

Als weiteres Schutzmittel können Gurtstraffer vorgesehen sein. Selbstverständlich können mehrere Schutzmittel miteinander kombiniert werden.

Ein wesentlicher Vorteil des erfindungsgemäßen Verfahrens ist, dass das Verfahren an jedem Sicherheitssitz des Kraftfahrzeugs autark und unabhängig von anderen Sicherheitssitzen durchgeführt werden kann. Es kommt zudem nicht zu einer Auslösung von Schutzmitteln, wenn der Sicherheitssitz nicht besetzt ist, da die für die Auslösung notwendigen Kräfte, die auf einer auf dem Sitz sitzenden Person zurückzuführen sind, nicht vorliegen.

Dadurch, dass nicht auf einen zentralen Beschleunigungssensor zurückgegriffen werden muss, der eine Ansprengung des Fahrzeugs detektiert, ist auch keine aufwendige Verkabelung des Kraftfahrzeugs notwendig. Die Systeme müssen nicht miteinander gekoppelt werden. Die Systeme sind nachrüstbar und systembedingt lokal wirksam, da die Erkennungseinheit ausschließlich die Relativverlagerung einer einzigen Sitzflächeneinheit bzw. eines einzigen Sicherheitssitzes relativ zum Kraftfahrzeug erfasst.

Ein weiterer Vorteil ist, dass die Erkennungseinheit sehr robust aufgebaut sein kann und daher auch unter schwierigsten Einsatzbedingungen einsatzsicher bleibt. Beispielsweise kann das Erkennen der Relativverlagerung durch mechanisches Auslösen eines Schalters erfolgen. Beispielsweise könnte ein Isolator zwischen einer Energiequelle, zum Beispiel einer Batterie, und einem elektrischen Leiter klemmend angeordnet sein, wobei der Isolator, zum Beispiel ein Stück Folie, am Sicherheitssitz befestigt ist und weggezogen wird, sobald sich der Sicherheitssitz relativ zum Kraftfahrzeug nach unten bewegt. Dann würde der Kontakt zwischen der Energiequelle und dem elektrischen Leiter geschlossen werden, so dass ein Auslösemittel, zum Beispiel für einen Airbag, ausgelöst werden kann. Eine solche Anordnung funktioniert selbstverständlich auch bei einer Relativbewegung zwischen einer Rückeneinheit und einer Sitzflächeneinheit eines Sicherheitssitzes.

Das Auslösemittel wird insbesondere elektrisch angesteuert, so dass die Erkennungseinheit ein elektrisches Signal an die Auslöseeinheit abgibt, welche wiederum das Schutzmittel auslöst, um einen ungebremsten Anprall der Person an dem Kraftfahrzeug zu verhindern.

In praktischer Ausführungsform besitzt der Sicherheitssitz mithin wenigstens eine Erkennungseinheit zum Erkennen der Relativverlagerung zwischen dem Sicherheitssitz und dem Kraftfahrzeug oder zum Erkennen der Relativverlagerung einer Sitzflächeneinheit im Verhältnis zu einer Rückeneinheit. Zudem ist ein Auslösemittel vorhanden, welches im Wirkzusammenhang mit der Erkennungseinheit steht und von dieser aktivierbar ist. Das Auslösemittel dient dazu, ein Schutzmittel auszulösen. Dadurch ist es möglich, die Einflüsse der Sekundärgefährdungen auf die Insassen des Kraftfahrzeugs zu mindern, insbesondere den Kopfanschlag an starre Teile der Fahrzeugstruktur im oberen Totpunkt oder beim slam down, bei welchem das Fahrzeug wieder nach unten fällt, oder wenn das Kraftfahrzeug umkippt oder sich überschlägt. In all diesen Fällen können geeignete Schutzmittel aktiviert werden.

Tests haben gezeigt, dass ein Dummy bei einer Ansprengung eines Kraftfahrzeugs nach ca. 50 ms nicht mehr beschleunigt wurde. Das angesprengte Kraftfahrzeug setzt aber erst nach ca. 800 ms wieder auf den Boden auf. Die eigentliche, initiale Beschleunigung des Kraftfahrzeugs nach oben wird jedoch sehr viel kürzer sein, da die erfindungsgemäßen Sicherheitssitze, die relativ zum Kraftfahrzeug verlagerbar sind bzw. bei welchen die Sitzflächeneinheit relativ zur Rückeinheit des Sitzes verlagerbar ist, die Beschleunigung verlängern und zeitlich verlagern.

In einem anderen Versuch mit einem sehr großen Kraftfahrzeug und viel Bodenfreiheit wurde festgestellt, dass das Fahrzeug seine maximale Geschwindigkeit nach ca. 20 ms erreicht. Die Beschleunigung wurde am Dach des Fahrzeugs gemessen. Bei kleineren Fahrzeugen wird die Beschleunigungsdauer wahrscheinlich kürzer sein. In jedem Fall ist es mit dem erfindungsgemäßen Verfahren möglich, auch bei kurzen Beschleunigungsdauern die Schutzmittel mit hinreichendem Vorlauf auszulösen und die Insassen des Fahrzeugs sicher und vor allen Dingen ohne Fehlauslösungen zu schützen, da Airbags mit Auslösezeiten von nur wenigen Millisekunden gezündet werden können.

Der Begriff "Kraftfahrzeug" umfasst insbesondere Landfahrzeuge, aber auch Luft- und Wasserfahrzeuge. Bei den Landfahrzeugen sind sowohl Rad- als auch Kettenfahrzeuge zu nennen, wie auch amphibische Fahrzeuge einschließlich Luftkissenboote. Bei den Luftfahrzeugen sind insbesondere Helikopter zu nennen. Alle Kraftfahrzeuge können zivile, aber auch militärische Fahrzeuge sein.

Die Erfindung wird nachfolgend anhand eines in den Zeichnungen dargestellten Ausführungsbeispiels näher erläutert. Es zeigt:
- Figur 1: einen Sicherheitssitz vor einer Ansprengung;
- Figur 2: einen Sicherheitssitz während einer Ansprengung und
- Figur 3: ein angesprengtes Kraftfahrzeug mit dem Sicherheitssitz am oberen Totpunkt.

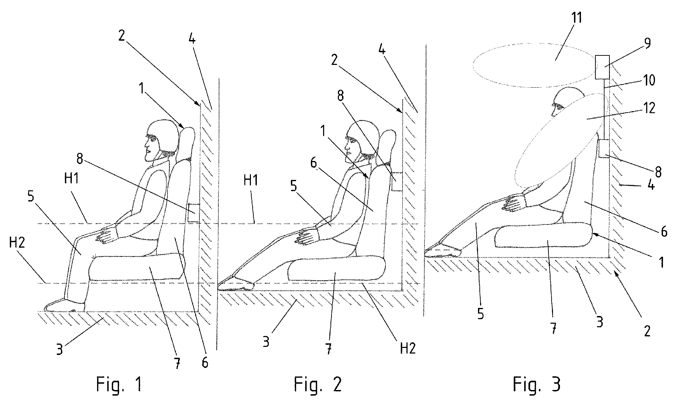

Figur 1 zeigt in stark vereinfachter Darstellung einen Sicherheitssitz 1. Der Sicherheitssitz 1 befindet sich in einem Kraftfahrzeug 2, von dem nur der Boden 3 und die Wand 4 dargestellt ist. Auf dem Sicherheitssitz 1 befindet sich eine Person 5.

Der Sicherheitssitz 1 besitzt eine Rückeneinheit 6, die im Wesentlichen vertikal orientiert ist und in nicht näher dargestellter Weise an der Wand 4 des Kraftfahrzeugs 2 befestigt ist. Die Sitzflächeneinheit 7 ist ausschließlich mit der Rückeneinheit 6 verbunden und dadurch vom Boden 3 des Fahrzeugs 2 entkoppelt. Die beiden mit unterbrochener Linie eingezeichneten Höhenniveaus H1, H2 sollen verdeutlichen, wie sich die Position des Sicherheitssitzes 1 relativ zum Kraftfahrzeug verändert, wenn es zu einer Ansprengung des Kraftfahrzeugs 2, beispielsweise bei Überfahren einer Landmine, kommt.

Figur 2 zeigt das Kraftfahrzeug 2 während einer Steigphase, d. h. nach der Ansprengung des Kraftfahrzeugs 2, die dazu führt, dass das Kraftfahrzeug 2 nach oben verlagert wird. Das ist daran zu erkennen, dass sich der Abstand zwischen dem Boden 3 zu dem Höhenniveau H2 verkleinert. Aufgrund der Massenträgheit der Person 5 wird der Sicherheitssitz 1 relativ zum Kraftfahrzeug 2 nach unten verlagert. Der Sicherheitssitz 1 bleibt zwar in derselben Lage wie in Figur 1, jedoch hat sich der Abstand zwischen der Sitzflächeneinheit 7 und dem Boden 3 verkleinert. Die Sitzflächeneinheit 7 schlägt zum Schutz der Person 5 jedoch nicht auf dem Boden 3 auf. Eine entsprechend konfigurierte Aufhängung des Sicherheitssitzes 1 ist bekannt und zählt zum Stand der Technik moderner Militärfahrzeuge.

Das Besondere bei dem erfindungsgemäßen Sicherheitssitz 1 ist jedoch eine Erkennungseinheit 8, die bei diesem Ausführungsbeispiel die Relativverlagerung des Sicherheitssitzes 1 relativ zum Fahrzeug 2 detektiert. Bei diesem Ausführungsbeispiel befindet sich die Erkennungseinheit 8 zwischen der Wand 4 und der Rückseite der Rückeneinheit 6. Die Erkennungseinheit 8 befindet sich in Figur 2 erkennbar im wesentlich größeren Abstand zum Höhenniveau H1, da die Erkennungseinheit 8 sich zusammen mit der Wand 4 verlagert.

Die Erkennungseinheit 8 kann in nicht näher dargestellter Weise sensorisch oder durch einfache mechanische Mittel detektieren, dass sich die Rückeneinheit 6 bzw. der Sicherheitssitz 1 insgesamt relativ zum Kraftfahrzeug 2 und konkret relativ zur Wand 4 in der Höhe verlagert hat. Diese Information wird dazu genutzt, ein Auslösemittel 9 anzusteuern, das über eine Leitung 10 im Wirkzusammenhang mit der Erkennungseinheit 8 steht.

Figur 3 zeigt das Kraftfahrzeug 2 am oberen Totpunkt der Hubbewegung. In dieser Position ist der Sicherheitssitz 2 zusammen mit dem Insassen 6 angehoben worden. Das ist darauf zurückzuführen, dass die Relativbewegung des Sicherheitssitzes 1 relativ zum Kraftfahrzeug 2 beschränkt ist, damit die Sitzflächeneinheit 7 nicht auf den Boden 3 schlägt. Am oberen Totpunkt setzt die Umkehrbewegung des Kraftfahrzeugs 2 ein, das durch die Erdanziehungskraft wieder nach unten gezogen wird. Aufgrund der Massenträgheit der Person 5 besteht die Gefahr, dass diese bei der anschließenden Abwärtsbewegung des Kraftfahrzeugs 2 sich den Kopf an Teilen des Kraftfahrzeugs 2 stößt. Ein Schutzmittel 11 in Form eines oberhalb des Kopfes der Person 5 angeordneten Airbags schützt die Person 5 vor schweren Verletzungen. Zusätzlich kann als weiteres Schutzmittel 12 ein Seitenairbag über das Auslösemittel 9 gezündet werden, so dass die Person 5 auch vor einem ungebremsten Anprall an dem Kraftfahrzeug 2 geschützt wird, wenn sich das Kraftfahrzeug 2 überschlägt oder umkippt.

### Bezugszeichen:

- 1 -: Sicherheitssitz
- 2 -: Kraftfahrzeug
- 3 -: Boden
- 4 -: Wand
- 5 -: Person
- 6 -: Rückeneinheit
- 7 -: Sitzflächeneinheit
- 8 -: Erkennungseinheit
- 9 -: Auslöseeinheit
- 10 -: Leitung
- 11 -: Schutzmittel
- 12 -: Schutzmittel

- H1 -: Höhenniveau
- H2 -: Höhenniveau

## Patentansprüche

1. Verfahren zur Reduzierung der Krafteinwirkung auf eine Person, die auf einem Sicherheitssitz eines Kraftfahrzeugs sitzt, wobei der Sicherheitssitz (1) durch eine aus einer Explosion resultierenden Kraft, die im Wesentlichen senkrecht nach oben wirkt, zusammen mit dem Kraftfahrzeug (2) bis zu einem oberen Totpunkt angehoben wird, wobei der Sicherheitssitz (1) unter der Last der Person (5) während einer Steigphase, die vom Zeitpunkt der Krafteinwirkung bis zum Erreichen des oberen Totpunktes dauert, entweder insgesamt relativ zum Kraftfahrzeug (2) verlagert wird oder eine Sitzflächeneinheit (7) besitzt, die zumindest teilweise relativ zu einer Rückeneinheit (6) des Sicherheitssitzes (1) während der Steigphase nach unten verlagert wird, wobei die Relativverlagerung zwischen dem Sicherheitssitz (1) und dem Kraftfahrzeug (2) oder die Relativverlagerung der Sitzflächeneinheit (7) von einer Erkennungseinheit (8) detektiert wird, die in Wirkzusammenhang mit einem Auslösemittel (9) steht, wobei das Auslösemittel (9) vor Erreichen des oberen Totpunktes ein Schutzmittel (11, 12) auslöst, welches einen ungebremsten Anprall der Person (5) an dem Kraftfahrzeug (2) verhindert und/oder auf die Person (5) wirkende Kräfte mindert.

2. Verfahren nach Anspruch 1, **dadurch gekennzeichnet, dass** als Schutzmittel (11) ein Kopfairbag ausgelöst wird.

3. Verfahren nach Anspruch 1 oder 2, **dadurch gekennzeichnet, dass** als Schutzmittel ein Seitenairbag (12) ausgelöst wird.

4. Verfahren nach einem der Ansprüche 1 bis 3, **dadurch gekennzeichnet, dass** als Schutzmittel ein Gurtstraffer ausgelöst wird

5. Verfahren nach einem der Ansprüche 1 bis 4, **dadurch gekennzeichnet, dass** das Detektieren der Relativverlagerung durch mechanisches Auslösen eines Schalters erfolgt.

6. Sicherheitssitz für ein Kraftfahrzeug,
a) wobei der Sicherheitssitz (1) entweder relativ zum Kraftfahrzeug (2) nach unten verlagerbar am Kraftfahrzeug (2) befestigt ist, derart, dass er nur im besetzen Zustand bei einer das Kraftfahrzeug (2) explosionsbedingt anhebenden Kraft relativ zum Kraftfahrzeug (2) verlagert wird, oder
b) wobei der Sicherheitssitz (1) eine Sitzflächeneinheit (7) besitzt, die im besetzten Zustand zumindest teilweise relativ zu einer Rückeneinheit (6) des Sicherheitssitzes (2) während einer Steigphase des Kraftfahrzeuges (2) nach unten verlagerbar ist, ausgelöst durch eine das Kraftfahrzeug (2) explosionsbedingt anhebende Kraft,
wobei eine Erkennungseinheit (8) zum Erkennen der Relativverlagerung zwischen dem Sicherheitssitz (1) und dem Kraftfahrzeug (2) oder der Relativverlagerung der Sitzflächeneinheit (7) vorgesehen ist, wobei die Erkennungseinheit (8) in Wirkzusammenhang mit einem Auslösemittel (9) steht, welches dafür vorgesehen ist, ein Schutzmittel (11, 12) auszulösen, welches dazu dient, einen ungebremsten Anprall einer auf dem Sicherheitssitz (1) sitzenden der Person (5) an dem Kraftfahrzeug (2) zu verhindern und/oder auf die Person (5) wirkende Kräfte zu mindern.

7. Sicherheitssitz nach Anspruch 6, **dadurch gekennzeichnet, dass** die Erkennungseinheit (8) einen durch die Relativverlagerung mechanisch betätigbaren Schalter aufweist.

8. Sicherheitssitz nach Anspruch 6 oder 7, **dadurch gekennzeichnet, dass** das Schutzmittel (11) ein Kopfairbag ist.

9. Sicherheitssitz nach einem der Ansprüche 6 bis 8, **dadurch gekennzeichnet, dass** das Schutzmittel (12) ein Seitenairbag ist.

10. Sicherheitssitz nach einem der Ansprüche 6 bis 9, **dadurch gekennzeichnet, dass** das Schutzmittel ein Gurtstraffer ist.

## Claims

1. Method for reducing the forces affecting a person sitting on a safety seat in a motor vehicle, the safety seat (1) being lifted together with the vehicle (2) to top dead centre by the force of an explosion acting substantially vertically upwards, the safety seat (1) either being shifted as a whole relative to the vehicle (2), under the load of the person (5), during a rising phase which lasts from the time of the impact of the force until top dead centre is reached, or having a seat surface unit (7) which is shifted downwards at least partially relative to a back unit (6) of the safety seat (1) during the rising phase, wherein the relative shift between the safety seat (1) and the vehicle (2) or the relative shifting of the seat surface unit (7) is detected by a detection unit (8) which is operatively connected to an actuating means (9), wherein the actuating means (9) triggers a protecting means (11, 12) before top dead centre is reached, the protecting means preventing unrestrained impact of the person (5) against the vehicle (2) and/or reducing the forces acting on the person (5).

2. Method according to claim 1, **characterised in that** a head airbag is actuated as the protecting means (11).

3. Method according to claim 1 or 2, **characterised in that** a side airbag (12) is actuated as the protecting means.

4. Method according to one of claims 1 to 3, **characterised in that** a belt tightener is actuated as the protecting means.

5. Method according to one of claims 1 to 4, **characterised in that** the relative movement is detected by the mechanical actuation of a switch.

6. Safety seat for a motor vehicle,
a) wherein the safety seat (1) is either secured to the vehicle (2) so as to be downwardly movable relative to the vehicle (2), such that it is only moved relative to the vehicle (2),when occupied, in the event of a force lifting the vehicle (2) as the result of an explosion, or
b) wherein the safety seat (1) comprises a seat surface unit (7) which when occupied is movable downwards at least partially relative to a back unit (6) of the safety seat (2) during a rising phase of the vehicle (2), actuated by the force of an explosion which lifts the vehicle (2),
wherein a detection unit (8) is provided, for detecting the relative shift between the safety seat (1) and the vehicle (2) or the relative shifting of the seat surface unit (7), the detection unit (8) being operatively connected to an actuating means (9) which is provided in order to actuate a protecting means (11, 12) which serves to prevent an unrestrained impact of a person (5) sitting on the safety seat (1) against the vehicle (2) and/or to reduce the forces acting on the person (5).

7. Safety seat according to claim 6, **characterised in that** the detection unit (8) has a switch which can be actuated mechanically by the relative shift.

8. Safety seat according to claim 6 or 7, **characterised in that** the protecting means (11) is a head airbag.

9. Safety seat according to one of claims 6 to 8, **characterised in that** the protecting means (12) is a side airbag.

10. Safety seat according to one of claims 6 to 9, **characterised in that** the protecting means is a belt tightener.

## Revendications

1. Procédé de réduction des forces exercées sur une personne, qui est assise sur un siège de sécurité d'un véhicule automobile, dans lequel le siège de sécurité (1) est soulevé par une force résultant d'une explosion, qui agit sensiblement à la verticale vers le haut, conjointement avec le véhicule automobile (2) jusqu'à un point mort supérieur, dans lequel le siège de sécurité (1) se déplace sous la charge de la personne (5) au cours d'une phase ascendante, qui dure depuis le moment où est exercée la force jusqu'à atteindre le point mort supérieur, de manière générale par rapport au véhicule automobile (2) ou possède une unité de surface de siège (7) qui est déplacée vers le bas au moins en partie par rapport à une unité de dossier (6) du siège de sécurité (1) au cours de la phase ascendante, dans lequel le déplacement relatif entre le siège de sécurité (1) et le véhicule automobile (2) ou le déplacement relatif de l'unité de surface de siège (7) est détecté par une unité de reconnaissance (8) qui opère en coopération avec un moyen de déclenchement (9), dans lequel le moyen de déclenchement (9) déclenche avant que ne soit atteint le point mort supérieur un moyen de protection (11, 12), qui empêche un impact non freiné de la personne (5) sur le véhicule automobile (2) et/ou réduit les forces agissant sur la personne (5).

2. Procédé selon la revendication 1, **caractérisé en ce que** l'on déclenche comme moyen de protection (11) un airbag de tête.

3. Procédé selon la revendication 1 ou la revendication 2, **caractérisé en ce que** l'on déclenche comme moyen de protection un airbag latéral (12).

4. Procédé selon l'une quelconque des revendications 1 à 3, **caractérisé en ce que** l'on déclenche comme moyen de protection un mécanisme de tension de ceinture de sécurité.

5. Procédé selon l'une quelconque des revendications 1 à 4, **caractérisé en ce que** la détection du déplacement relatif se fait par déclenchement mécanique d'un commutateur.

6. Siège de sécurité pour véhicule automobile,
a) dans lequel le siège de sécurité (1) est fixé au véhicule automobile (2) de manière à pouvoir se déplacer vers le bas par rapport au véhicule automobile (2) de sorte qu'il ne soit déplacé qu'à l'état occupé dans le cas d'une force exercée sur le véhicule automobile (2) lors d'une explosion par rapport au véhicule automobile (2) ou
b) dans lequel le siège de sécurité (1) possède une unité de surface de siège (7) qui peut être déplacée vers le bas à l'état occupé au moins en partie par rapport à une unité de dossier (6) du siège de sécurité (2) au cours d'une phase ascendante du véhicule automobile (2) due à une force s'exerçant sur le véhicule automobile (2) à la suite d'une explosion,
dans lequel une unité de reconnaissance (8) est prévue pour reconnaître le déplacement relatif entre le siège de sécurité (1) et le véhicule automobile (2) ou le déplacement relatif de l'unité de surface de siège (7), dans lequel l'unité de reconnaissance (8) opère en coopération avec un moyen de déclenchement (9) qui est prévu pour déclencher un moyen de protection (11, 12), qui sert à empêcher un impact non freiné d'une personne (5) assise sur le siège de sécurité (1) sur le véhicule automobile (2) et/ou à réduire les forces s'exerçant sur la personne (5).

7. Siège de sécurité selon la revendication 6, **caractérisé en ce que** l'unité de reconnaissance (8) présente un commutateur qui peut être commandé mécaniquement par le déplacement relatif.

8. Siège de sécurité selon la revendication 6 ou la revendication 7, **caractérisé en ce que** le moyen de protection (11) est un airbag de tête.

9. Siège de sécurité selon l'une quelconque des revendications 6 à 8, **caractérisé en ce que** le moyen de protection (12) est un airbag latéral.

10. Siège de sécurité selon l'une quelconque des revendications 6 à 9, **caractérisé en ce que** le moyen de protection est un mécanisme de tension de ceinture de sécurité.
